# FASCICULE DE BREVET EUROPEEN

(11) **EP 3 319 150 B1**
(45) Date de publication et mention de la délivrance du brevet: **06.07.2022**
(21) Numéro de dépôt: 17199309.0
(22) Date de dépôt: 31.10.2017
(51) Int. Cl.: H01M 10/05, H01M 10/42, H01M 10/44, H01M 10/48, H01M 50/50, H01M 10/052, H01M 10/0525, H01M 10/054, H01M 10/0587

(54) **PROCÉDÉ DE RÉGÉNERATION DE LA CAPACITÉ D'UN ACCUMULATEUR ÉLECTROCHIMIQUE MÉTAL-ION**
VERFAHREN ZUM REGENERIEREN EINES METALL-IONEN-AKKUMULATORS
METHOD FOR REGENERATING THE CAPACITY OF A METAL-ION ELECTROCHEMICAL CELL

(30) Priorité: 03.11.2016 FR 1660615
(43) Date de publication de la demande: 09.05.2018
(73) Titulaire: Commissariat à l'Énergie Atomique et aux Énergies Alternatives, 75015 Paris (FR)
(72) Inventeur: BRUN-BUISSON, David, 38470 VATILIEU (FR); GENIES, Sylvie, 38120 SAINT-ÉGRÈVE (FR); TESSARD, Romain, 73100 AIX-LES-BAINS (FR)
(74) Mandataire: Nony

(56) Documents cités:
- WO-A1-2014/130519
- FR-A3- 2 997 504
- US-A1- 2006 093 871
- US-A1- 2008 003 490

## Description

### Domaine technique

La présente invention concerne le domaine des générateurs électrochimiques métal-ion, qui fonctionnent selon le principe d'insertion ou de désinsertion, ou autrement dit intercalation- désintercalation, d'ion métal dans au moins une électrode.

Elle concerne plus particulièrement un accumulateur électrochimique au lithium, de type Li-ion, comportant au moins une cellule électrochimique constituée d'une anode (électrode négative) et d'une cathode (électrode positive) de part et d'autre d'un séparateur imprégné d'électrolyte, la cellule étant enroulée sur elle-même autour d'un axe d'enroulement, deux collecteurs de courant dont un est relié à l'anode et l'autre à la cathode, et un boitier agencé pour loger la cellule électrochimique enroulée avec étanchéité tout en étant traversée par une partie des collecteurs de courant formant les bornes de sortie, aussi appelés pôles.

L'invention vise à proposer une nouvelle méthode d'évaluation de la quantité d'ions perdue dans un accumulateur métal-ion et un procédé associé de régénération de la capacité de ces générateurs électrochimiques, à partir de l'évaluation faite.

Par « régénération de capacité », on entend ici et dans le cadre de l'invention, la récupération de la capacité perdue d'un accumulateur dimensionnée initialement avec les matériaux des électrodes de la (des) cellule(s) qui le constitue(nt), c'est-à-dire du niveau de courant initial pouvant être extrait en une période de temps donnée.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

### Etat de la technique

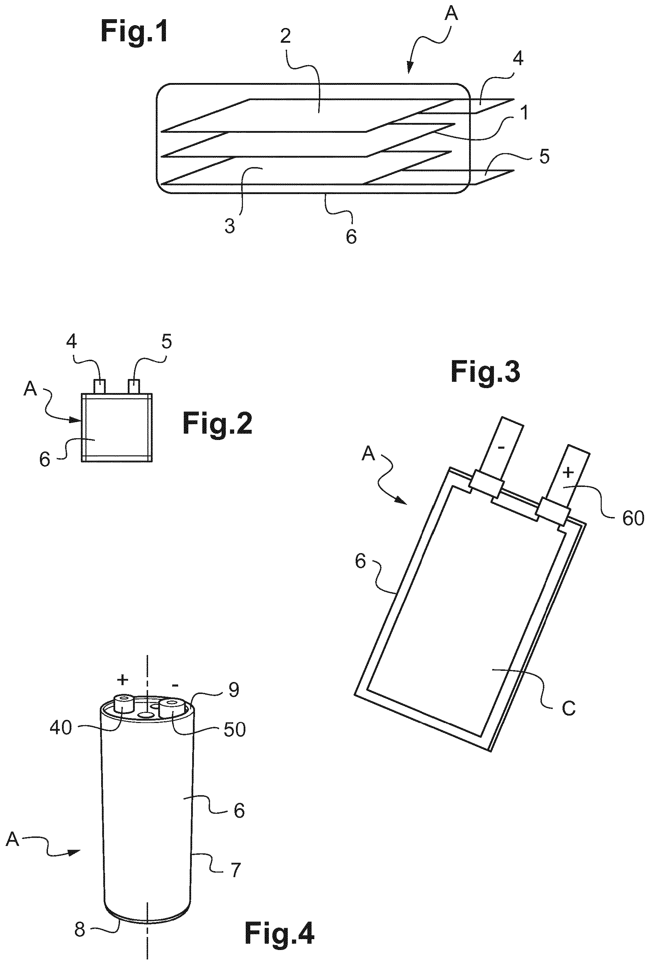

Telle qu'illustrée schématiquement en figures 1 et 2, une batterie ou accumulateur lithium-ion A comporte usuellement au moins une cellule électrochimique C constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous ces deux dernières formes, le constituant peut comprendre un séparateur, sous la forme d'un ou plusieurs films, en polymère ou en composite microporeux, imbibé d'électrolyte (s) organique (s) ou de type liquide ionique qui permet le déplacement des ions Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode 2 est constituée de matériaux d'insertion du cation Lithium qui sont en général composite, comme le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiMn₂O₄, ou l'oxyde de nickel cobalt aluminium lithié.

L'électrode négative ou anode 3 est très souvent constituée de carbone, graphite ou en Li₄Ti₅O₁₂ (matériau titanate), éventuellement également à base de silicium ou à base de lithium, ou à base de métaux tels que l'étain, l'antimoine et de leurs alliages ou de composite formé à base de silicium.

L'anode 3 et la cathode 2 en matériau d'insertion au Lithium peuvent être déposées selon une technique usuelle sous la forme d'une couche active sur une feuille métallique constituant un collecteur de courant.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement autour de 3,6 Volt.

Selon le type d'application visée, on cherche à réaliser soit un accumulateur lithium-ion fin et flexible, soit un accumulateur rigide : l'emballage est alors soit souple, soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à 10⁻⁶ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

Aussi, à ce jour un emballage rigide utilisé est constitué d'un boitier métallique, de préférence en un métal léger et/ou peu coûteux, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après. Des bottiers réalisés en acier recouvert d'un revêtement bimétal en cuivre/nickel ont déjà été envisagés dans la demande de brevet WO 2010/113502.

Des boitiers en matière plastique rigide, en particulier intégralement en polymère ont également déjà été envisagés, en particulier dans la demande de brevet US 2010/316094. Bien que présentant une tenue mécanique importante, ces boitiers n'ont que peu de chances d'être viable économiquement en raison du prix de leur matériau constitutif.

Des boitiers en matériau mixte polymère/fibres ont été également envisagés.

L'avantage principal des emballages rigides est leur étanchéité élevée et maintenue au cours du temps du fait que la fermeture des boitiers est réalisée par soudure, en générale par soudure au laser.

La géométrie de la plupart des boitiers d'accumulateurs Li-ion est cylindrique, car la plupart des cellules électrochimiques des accumulateurs sont enroulées par bobinage selon une géométrie cylindrique autour d'un axe d'enroulement aussi dénommé usuellement mandrin. Des formes prismatiques de boitiers ont également déjà été réalisées avec enroulement autour d'un mandrin de forme prismatique.

Un des types de boitier rigide de forme cylindrique, usuellement fabriqué pour un accumulateur Li-ion de forte capacité et à durée de vie supérieure à 10 ans, est illustré en figure 4.

Le boitier 6 d'axe longitudinal X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle. Le boitier 6 est au potentiel de la borne positive 40.

Quel que soit le type d'emballage souple ou rigide par boitier envisagé à ce jour, la ou les cellules électrochimiques est (sont) de fait contenue(s) dans une enceinte complètement étanche vis-à-vis de l'extérieur.

Le fonctionnement d'un accumulateur ou batterie lithium-ion (Li-ion) repose sur le principe d'oxydo-réduction réversible des matériaux d'anode (électrode négative) et cathode (électrode positive) qui les composent par une insertion/désinsertion d'ions lithium en leur sein. Cette propriété permet à la batterie de stocker de l'énergie sous forme électrochimique.

Par exemple, au cours d'une charge, il se produit une désinsertion des ions lithium de la cathode avec leur insertion dans les même quantités dans l'anode, et vice-et-versa au cours de la décharge. La quantité d'ions lithium utilisée au cours de ces processus d'insertion est directement proportionnelle à la capacité de l'accumulateur ou batterie.

Dans le cas particulier d'un accumulateur Li-ion à anode en graphite, du fait de son potentiel en fin de charge très bas, au-dessous de 500mV vs Li⁺/Li, il est connu qu'une partie du lithium inséré à l'état échangeable est consommée au cours de la première charge de l'accumulateur, appelée « étape de formation ». Cela a pour effet d'entrainer la création d'un film de passivation (SEI, acronyme anglais pour « *Solid-Electrolyte-Interphase* »), et de consommer du lithium échangeable, c'est-à-dire apte à être inséré/désinséré. De ce fait, la capacité de l'accumulateur chute proportionnellement avec cette consommation de lithium.

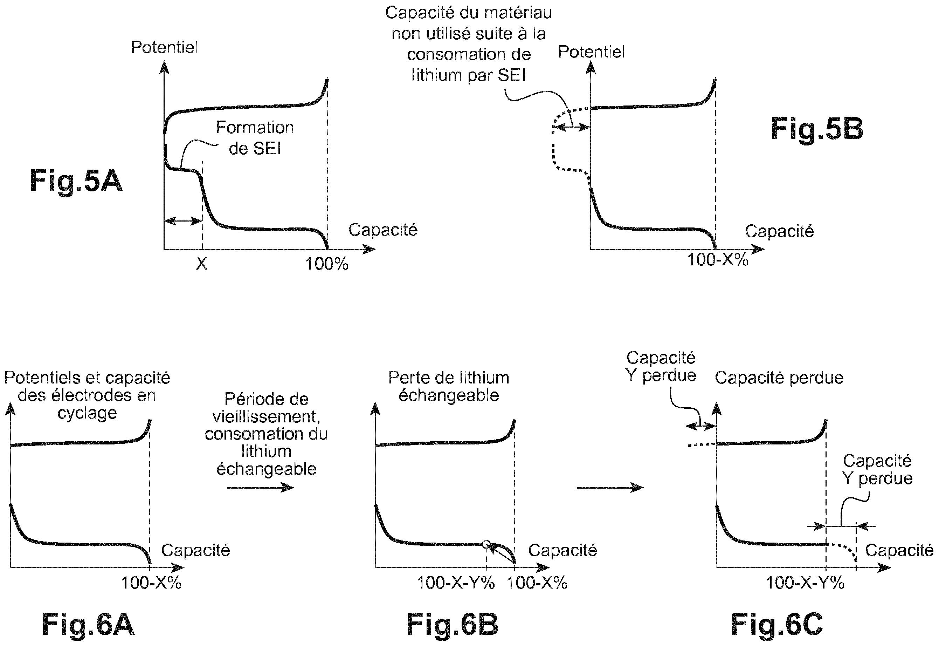

On a représenté aux figures 5A et 5B, les courbes de potentiel des électrodes (cathode en haut et anode en bas) d'un accumulateur Li-ion en fonction de la capacité en lithium échangeable, respectivement à une capacité initiale correspondant à 100% de l'état de charge et à une capacité réduite correspondant à 100-x % de l'état de charge avec une perte de x% de charge à l'électrode négative générée par la consommation d'ions lithium échangeables.

Comme illustré en figure 5B comparativement à la figure 5A, les potentiels des matériaux actifs d'électrode ne sont plus capables d'atteindre les valeurs initiales des états de charge extrêmes de l'accumulateur (0 et 100%) par lithiation/délithiation en raison du manque d'ions lithium échangeables. Autrement dit, du fait de la formation du film SEI, les électrodes ne sont utilisées que partiellement, comme schématisé en figure 5B par les courbes situées à gauche de l'axe des ordonnées qui représentent le potentiel non exploré par les électrodes au cours de l'utilisation de l'accumulateur. Ce mode de fonctionnement de l'accumulateur n'est donc pas optimal, puisqu'une partie fonctionnelle des matériaux ne prend pas part au stockage des ions. La capacité déployée par l'accumulateur ne représente plus que 100-X% de la capacité initiale en lithium échangeable.

Il est également connu que la formation de SEI peut se produire lentement au cours de l'utilisation de l'accumulateur. Ce phénomène se produit généralement sur l'anode à bas potentiel, lorsque l'accumulateur est complètement chargé. La figure 6B montre schématiquement la consommation de lithium échangeable, au cours d'une période de vieillissement de l'accumulateur chargé, due à la formation lente de SEI depuis la formation de SEI initiale de la figure 6A, qui correspond à la figure 5B.

Comme montré en figure 6C, la capacité restante et les potentiels des électrodes, sont à nouveau amoindris. La capacité de l'accumulateur est alors fonction de la part de lithium échangeable restant, à hauteur de 100-X-Y% de la quantité initiale.

De plus, ces pertes de capacité engendrées peuvent induire l'apparition d'autres phénomènes dégradants pour ces matériaux.

Dans le cas où les états de charges extrêmes ont des valeurs réduites de X+Y% du fait du manque d'ions lithium échangeables, le système électronique de gestion de la batterie (BMS) n'arrête pas les applications de courant suffisamment tôt, ce qui induit des surtensions sur les matériaux d'insertion actifs, ce qui entraîne leur dégradation. On rappelle ici que le BMS (acronyme anglais de « *Battery Management System* ») a notamment pour fonction d'arrêter les applications de courant dès l'atteinte de valeurs de tension seuil, i.e. une différence de potentiels entre les deux matériaux d'insertion actifs.

Le BMS stoppe donc les applications de courant (charge, décharge) dès l'atteinte de tensions (différence des potentiels des deux matériaux actifs) seuils. Or, les potentiels des matériaux actifs, non mesurables par le BMS, n'atteignent plus les valeurs seuils des états de charge initiaux extrêmes de l'accumulateur (0 et 100%) en raison du manque d'ions lithium échangeables. Les applications de courant ne sont pas stoppées assez tôt dans les états de charge extrême, ce qui induit également des surtensions sur les matériaux actifs, entraînant leurs dégradations structurales et chimiques.

Certains documents de l'état de l'art ont déjà identifiés le problème de perte de capacité des accumulateurs Li-Ion par le manque d'ions lithium échangeables. Les solutions proposées permettent de réinjecter des ions lithium pour compenser ce manque.

Le brevet JP2012089471 propose d'insérer depuis l'extérieur d'un accumulateur Li-ion, à travers son emballage, un équipement, sous la forme d'une seringue, adaptée pour réinjecter des ions lithium Li⁺ . Plus précisément, la seringue comporte une chambre contenant un produit électrolyte lui-même en contact avec le tube d'injection qui permet d'avoir une continuité ionique entre le produit et les matériaux actifs de batterie par remplissage d'électrolyte. Le tube d'injection est conducteur électronique afin de permettre un échange d'électrons entre un matériau actif d'accumulateur et le composé réducteur. Ce dernier a un potentiel d'oxydo-réduction faible pour engendrer spontanément une réaction avec l'un des matériaux actifs des deux électrodes de l'accumulateur. Ainsi, par la mise en contact entre le matériau d'insertion actif de l'une des électrodes et le produit, il est possible de réinsérer des ions lithium dans les matériaux actifs, par conduction ionique et électronique. Cette solution nécessite une conception d'accumulateurs qui intégre un organe de pénétration du tube d'injection au travers de l'emballage. La fragilité de l'accumulateur est donc plus importante, le risque de fuite est non négligeable.

Les demandes de brevet US20060093871, US20086003490, FR2997504, WO201224211, EP2595235 et JP2011076930, proposent quant à elles d'intégrer dans un accumulateur Li-ion, une troisième électrode, c'est-à-dire une électrode supplémentaire à l'anode et la cathode d'une cellule électrochimique. La troisième électrode ainsi intégrée est adaptée pour contenir des ions lithium qu'il est possible d'extraire pour les injecter dans les matériaux d'insertion actifs de l'accumulateur. Cette opération est effectuée électrochimiquement, par l'application d'un courant entre cette troisième électrode et l'une choisie parmi l'anode ou la cathode de l'accumulateur. Cette solution nécessite donc l'ajout d'une électrode supplémentaire, ce qui a comme inconvénient d'ajouter du volume et du poids à l'accumulateur. Il est aussi nécessaire d'ajouter une troisième borne de sortie à l'architecture des accumulateurs reliée électriquement à la troisième électrode, afin d'appliquer le courant entre cette troisième électrode et celle dans laquelle les ions lithium sont réinjectés pour régénérer la capacité initiale. Cette troisième borne de sortie doit être nécessairement réalisée en formant une traversée, c'est-à-dire avec l'élément conducteur électrique isolé de la paroi de l'emballage, qui soit étanche. Cette solution présente donc l'inconvénient majeur de complexifier l'architecture des accumulateurs Li-ion.

La demande de brevet FR3017248 propose l'utilisation de l'emballage comme stockage d'ions métalliques au sein de l'accumulateur pour la régénération de la capacité. Ainsi, la solution selon cette demande consiste à réinjecter des ions échangeables dans les matériaux actifs afin de régénérer la capacité de l'accumulateur et d'éviter l'apparition de surtensions dégradantes des électrodes en fin de charge ou décharge, grâce à l'intégration d'un emballage fonctionnalisé pour la régénération.

Les inventeurs de la présente invention ont également proposé de réaliser une intégration de stockage d'ions dans le mandrin d'enroulement de la cellule électrochimique, solution qui a fait l'objet de la demande de brevet FR 1561746 déposée le 02 décembre 2015 au nom du déposant.

Quel que soit le composant intégré fonctionnalisé pour une régénération de la quantité d'ions échangeables, l'accumulateur présente nécessairement une borne supplémentaire ainsi qu'une continuité électrique assurée entre cette borne supplémentaire et le composant de régénération, comme cela est mis en œuvre pour les deux électrodes, positives et négatives, constituantes d'un accumulateur métal-ion.

Ainsi, afin de permettre l'extraction des ions du matériau de régénération par l'imposition d'un courant pendant les phases de régénération, l'intégration du composant de régénération selon l'invention, doit être faite de sorte qu'on assure :
- une continuité électrique entre le matériau de régénération du mandrin et la borne supplémentaire;
- aucun contact électrique direct entre le matériau de régénération du composant et les électrodes positives et négatives, constituantes de l'accumulateur métal-ion;
- une conduction ionique entre le matériau de régénération du composant et les électrodes afin de permettre aux ions métalliques d'être réinjectés au sein de l'accumulateur dans une quantité d'ions qu'il est possible d'échanger.

Avant d'effectuer la phase de régénération, il est nécessaire d'évaluer la quantité d'ions échangeable à réinjecter au sein des matériaux de stockage dans l'accumulateur afin d'en régénérer sa capacité.

Les inventeurs ont analysé que les méthodes connues d'évaluation n'étaient pas toujours précises et/ou aisées à mettre en oeuve en application réelle.

Par exemple, la mesure d'impédance est reconnue dans le domaine des accumulateurs métal-ion comme permettant d'obtenir des informations sur l'état des matériaux internes. La mesure d'impédance entre les deux bornes de l'accumulateur, dite mesure deux points, est extrêmement restrictive et ne permet pas d'exploiter cette technique pour l'indication précise d'état d'accumulateur.

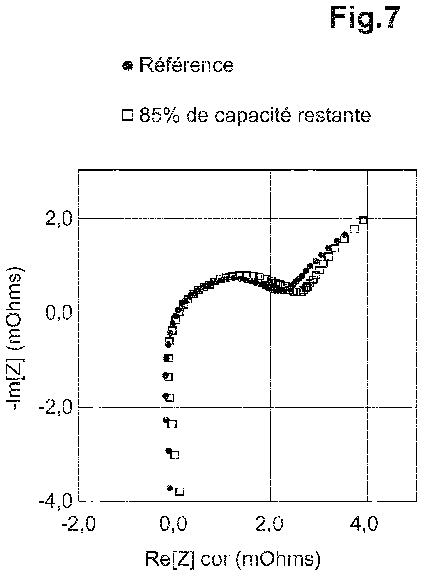

La figure 7 présente un exemple de deux spectres d'impédance entre deux bornes d'un accumulateur Li-ion, obtenus selon la mesure deux points. On précise que sur cette figure la légende en abscisses désigne la partie imaginaire de l'impédance, tandis que celle en ordonnées désigne la partie logarithmique de l'impédance. Ces mesures ont été obtenues sur un accumulateur Li-ion en début de vie (courbe de référence avec en points pleins) et après un vieillissement ayant induit une perte de capacité de 15% (courbe avec points vides). La mesure a été effectuée sous une perturbation en potentiel de 10mV, au potentiel d'accumulateur de 3,5V. Jusqu'à présent, il est admis par l'ensemble des concepteurs d'accumulateurs Li-ion, des informations sur l'épaisseur de la couche de SEI générée sur l'électrode négative, et donc la quantité d'ions échangeables consommés, sont contenues dans la mesure de résistance, notée R, déterminable par le diamètre du demi-cercle des moyennes fréquences du spectre, environ entre 1kHz et 1Hz. Comme cela ressorte de la figure 7, la faible différence entre les deux spectres montre clairement que la mesure d'impédance en deux points est une technique difficilement exploitable en application réelle pour l'évaluation de la capacité perdue d'un accumulateur métal-ion.

Par ailleurs, la phase de régénération proprement dite, est jusqu'à present réalisée par imposition, d'un courant entre la borne du composant de régénération et l'une des deux électrodes de l'accumulateur. Cela impose d'utiliser un équipement électronique pour la régulation et le contrôle du courant entre le composant de régénération et l'une des électrodes, ce qui peut être contraignant dans certains cas.

Il existe donc un besoin d'améliorer encore les solutions existantes d'évaluation et de régénération de la capacité d'un accumulateur métal-ion au moyen d'un composant de régénération intégré dans l'accumulateur Li-ion, notamment afin d'obtenir une évaluation de la quantité d'ions échangeables plus précise et/ou aisée à mettre en oeuve en application réelle, et/ou afin de s'affranchir des contraintes d'imposition de courant pour la régénération.

Le but de l'invention est de répondre au moins en partie à ce besoin.

### Exposé de l'invention

Pour ce faire, l'invention a pour objet selon un premier de ses aspects, un procédé de régénération de la capacité d'un accumulateur électrochimique métal-ion, le procédé comportant la détermination de la dérivée temporelle du potentiel d'une des deux électrodes.

La détermination est de préférence réalisée sur l'électrode négative (anode) de l'accumulateur.

Les inventeurs ont pensé tout d'abord à mesurer le potentiel des électrodes pour estimer la capacité perdue d'un accumulateur métal-ion.

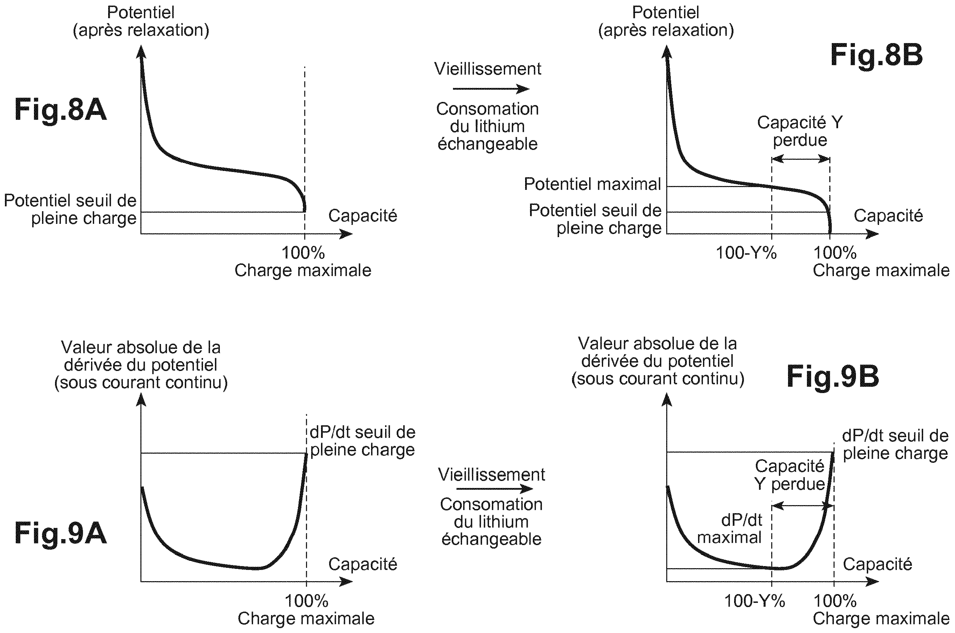

La figure 8A illustre sous forme d'une courbe (courbe de dessous), le potentiel de l'électrode négative en graphite, en début de vie d'un accumulateur Li-ion, le potentiel étant mesuré après relaxation, classiquement d'une durée de 3 minutes hors imposition de courant. La courbe du dessus illustre quant à elle le potentiel seuil d'une pleine charge caractéristique. Cette valeur seuil peut être mesurée en début de vie de l'accumulateur, ou peut être renseignée par le concepteur de l'algorithme du BMS.

La figure 8B illustre également sous forme d'une courbe le potentiel de l'électrode négative en graphite, après une phase de vieillissement ayant induit une perte de capacité de l'accumulateur d'une valeur de Y%. Dans ce cas, le potentiel de l'électrode négative ne peut pas dépasser la valeur schématisée par « potentiel maximal » sur la figure 8B, en raison du manque de lithium échangeable. Il est alors possible d'estimer la capacité perdue à ce potentiel maximal, noté Y, et d'imposer une phase de régénération pour réinjecter une quantité de lithium échangeable suffisante pour la régénération totale de la capacité de l'accumulateur.

Néanmoins, les inventeurs ont analysé qu'en pratique le potentiel d'un composant de régénération (boitier, mandrin) n'est pas forcément stable au cours de la durée de vie de l'accumulateur, et que le potentiel de l'électrode négative est obtenu par une mesure de tension par rapport au potentiel du composant de régénération.

Ils ont en conclu qu'il n'est donc pas toujours possible d'utiliser la valeur absolue du potentiel de l'électrode négative, comme valeur seuil, car le faire pourrait induire une mesure imprécise.

Aussi, les inventeurs sont parvenus à la conclusion qu'il était préférable de déterminer un seuil relatif, et que celui immédiatement disponible était la dérivée temporelle du potentiel d'une des deux électrodes.

Le procédé selon l'invention offre également l'avantage de pouvoir être mis en œuvre sous courant de charge ou de décharge, sans nécessiter de période de relaxation.

L'invention concerne également sous un autre de ses aspects un procédé de régénération de la capacité d'un accumulateur électrochimique métal-ion intégrant un composant de régénération comportant au moins une zone de stockage d'ions métalliques,
le procédé comportant les étapes suivantes :
a/ constitution de l'accumulateur avec la mise en œuvre d'un composant de régénération dont le potentiel électrochimique est inférieur à celui de l'anode et/ou de la cathode d'accumulateur, et avec l'agencement d'un élément isolant ionique entre les électrodes et le composant de régénération,
b/ évaluation de la quantité d'ions métalliques échangeables, de préférence tel que décrit précédemment;
c/ lorsque la quantité d'ions métal évaluée est inférieure ou égale à une valeur seuil, application d'un paramètre sur l'élément depuis l'extérieur de l'accumulateur, de sorte à provoquer la conduction ionique et ainsi la désinsertion d'ions métalliques du composant et leur insertion dans le matériau électrochimique actif de l'anode et/ou de la cathode d'accumulateur.

Ainsi, grâce au procédé selon l'invention, le composant de régénération peut induire une régénération spontanée de la capacité de l'accumulateur. Même s'il peut être nécessaire de contrôler le courant lors de la phase de régénération proprement dite, la régénération peut alors être activée sans courant imposé, ce qui est avantageux car permet une mise en œuvre plus facile. En outre, comparativement à une régénération par imposition de courant, la régénération spontanée par un élément bloquant initialement la conduction ionique a pour avantage de ne pas nécessiter l'utilisation d'une troisième borne.

L'étape c/ peut être réalisée par application d'une température globale sur l'accumulateur et/ou locale au moyen d'une résistance chauffante sur l'élément initialement isolant ionique, et/ou par actionnement magnétique et/ou électrique et/ou thermique et/ou par application d'une ou plusieurs ondes lumineuses et/ou d'une ou plusieurs ondes mécaniques.

Selon un mode de réalisation avantageux, l'étape a/ est réalisée au moyen d'un film de paraffine sous forme solide, en tant qu'élément d'isolation ionique étant agencé entre le composant de régénération et les électrodes, l'étape c/ étant réalisée par application d'une température au-delà de la température de fusion de la paraffine.

Ainsi, selon ce mode l'élément composant bloquant la conduction ionique depuis le composant de régénération est constitué par un film de paraffine solide constituée d'hydrocarbure saturé de formule CₙH₂ₙ₊₂, avec n avantageusement compris entre 20 et 40, logé entre le composant de régénération et les électrodes.

En appliquant une haute température, typiquement comprise entre 50 et 65°C, soit par chauffage de l'accumulateur, soit par chauffage local d'une résistance chauffant ou autre, selon la valeur de n, la paraffine est amenée à fondre, ce qui entraine un déblocage des échanges ioniques entre le composant de régénération et les électrodes.

Dans le cas d'une sélection d'un matériau de régénération sélectionné de sorte à ce que son potentiel électrochimique soit inférieur à celui de l'électrode de l'accumulateur choisi pour la réinjection de lithium échangeable, la régénération est spontanée dès la fonte de la paraffine. Par exemple, pour un accumulateur Li-ion, le composant de régénération peut être avantageusement en aluminium lithié, et l'électrode de ré-injection d'ions peut être l'électrode positive en phosphate de fer lithié (LiFePO₄).

Ainsi, dans le procédé selon l'invention, une fois, l'évaluation du manque d'ions échangeables, l'activation du composant de régénération, c'est-à-dire la réalisation de la conduction ionique entre lui et les électrodes de l'accumulateur permet d'effectuer de manière spontanée une désinsertion des ions du composant et ce sans application d'un courant électrique entre la cathode ou l'anode de l'accumulateur et le composant. Les ions extraits de leur zone de stockage dans le composant sont alors insérés dans le matériau d'insertion actif de l'accumulateur, ce qui permet de récupérer des ions échangeables. La capacité de l'accumulateur s'en trouve directement régénérée.

L'invention concerne également un procédé de contrôle de la régénération d'un accumulateur métal-ion dont la capacité est en cours de régénération ou régénérée décrit précédemment, comportant l'un et/ou l'autre des étapes suivantes :
i/ imposition d'une charge totale puis d'une décharge, afin de comparer la capacité à celle de l'accumulateur en début de vie;
ii/ atteinte du potentiel seuil d'au moins une électrode à l'état de pleine charge;
iii/ atteinte du seuil de la dérivée temporelle du potentiel d'au moins une électrode à l'état de plein charge.

L'invention a enfin pour objet un accumulateur (A) électrochimique métal-ion, tel qu'un accumulateur Li-ion, comportant :
- au moins une cellule électrochimique C comportant, une cathode, une anode et un séparateur, imprégné d'un électrolyte, entre l'anode et la cathode, la cellule étant enroulée sur elle-même,
- un composant de régénération comportant au moins une zone de stockage d'ions métalliques,
- deux collecteurs de courant dont un est relié à l'anode et l'autre à la cathode,
- un boitier agencé pour loger la cellule électrochimique enroulée avec étanchéité tout en étant traversé par une partie des collecteurs de courant formant les bornes de sortie,
- un élément d'isolation ionique entre les électrodes de la cellule électrochimique et le composant de régénération, l'élément étant adapté de sorte que son isolation ionique soit inopérante par application d'un paramètre depuis l'extérieur de l'accumulateur.

Selon un mode de réalisation avantageux, les connexions permettant la conduction électrique entre le composant de régénération et une parmi les deux électrodes sont dimensionnées de telle sorte que la résistance électrique équivalente du circuit constitué par ladite électrode et le composant implique une limitation de courant par rapport aux potentiels des électrodes.

L'accumulateur selon l'invention peut être un accumulateur Lithium-ion, Sodium-ion, Magnésium-ion, ou Aluminium-ion.

Dans les modes de réalisation avantageux d'un accumulateur Li-ion, les définitions suivantes s'appliquent.

Le matériau du composant de régénération est de préférence choisi parmi un métal formant un alliage avec le lithium, de préférence un alliage aluminium-lithium de formule LiₓAl avec x compris entre 0 et 1, un alliage silicium-lithium, un alliage bismuth-lithium, un alliage étain-lithium.

Par « anode ou cathode en matériau d'insertion au Lithium », on entend une électrode comportant au moins un matériau d'insertion au lithium et éventuellement, au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des nombres positifs.

Par « matériau d'insertion au lithium », en particulier pour l'électrode négative, on entend également un matériau choisi parmi: oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiés et leurs dérivés et les oxydes de titane lithiés tels que Li₄Ti₅O₁₂ et leurs dérivés et un mélange de ceux-ci.

Par « dérivé lithié », on entend des composés de formule Li(₄₋ₓ₁)MₓₗTi₅O₁₂ et Li₄Ti(_{5-y1})N_{y1}O₁₂, où xl et yl sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici Ti(_{5-y1})N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Selon une variante de réalisation, toutes les anodes sont en graphite et les cathodes en LiFePO₄.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

### Description détaillée

D'autres avantages et caractéristiques ressortiront mieux à la lecture de la description détaillée, faite à titre illustratif en référence aux figures suivantes parmi lesquelles:
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective et par transparence d'un accumulateur lithium-ion avec son emballage souple selon l'état de l'art ;
- la figure 4 est une vue en perspective d'un accumulateur lithium-ion cylindrique selon l'état de l'art avec son emballage rigide constitué d'un boitier ;
- les figures 5A et 5B illustrent les courbes de potentiel des électrodes (cathode en haut et anode en bas) d'un accumulateur Li-ion en fonction de la capacité de lithium échangeable, respectivement au cours de la première charge à une capacité initiale correspondant à 100% de l'état de charge et après cette première charge, à une capacité réduite correspondant à 100-x % de l'état de charge avec une perte de x% de charge à l'électrode négative générée par le manque d'ions lithium échangeables consommés lors de la première charge dite étape de formation;
- les figures 6A à 6C illustrent les courbes de potentiel des électrodes (cathode en haut et anode en bas) d'un accumulateur Li-ion en fonction de la capacité de lithium échangeable;
- la figure 7 illustrent les courbes des spectres d'impédance électrochimique mesurés pour une tension d'un accumulateur Li-ion de 3,5V, avec une perturbation de 10mV, selon un technique dite deux points selon l'état de l'art respectivement en début de vie d'accumulateur (référence) et après 15% de capacité perdue ;
- les figures 8A et 8B illustrent les courbes de potentiels après relaxation d'une électrode négative d'un accumulateur Li-ion, respectivement en début de vie puis après une période de vieillissement;
- les figures 8A et 8B illustrent les courbes de la dérivée temporelle des potentiels après relaxation d'une électrode négative d'un accumulateur Li-ion, respectivement en début de vie puis après une période de vieillissement.

Les figures 1 à 8B ont déjà été commentées en détail en préambule. Elles ne sont donc pas décrites ci-après.

On considère un accumulateur Li-ion, avec une électrode positive 2 en lithium phosphate de fer (LFP) et une électrode négative 3 en graphite. La capacité initiale de cet accumulateur est de 18Ah.

Cet accumulateur a été conçu de sorte à intégrer un composant de régénération qui peut soit être le boitier 6, soit le mandrin autour duquel la cellule électrochimique est enroulée.

Ce composant de régénération est constitué d'un alliage électrochimique de lithium/ aluminium, dimensionné de sorte à pouvoir régénérer 9Ah, soit 50% de la capacité initiale de l'accumulateur.

Par exemple, si le composant de régénération est constitué par un mandrin, il peut avoir une géométrie cylindrique, de 6 mm de diamètre pour 11 cm de hauteur. Sa surface extérieure est donc de 20,7 cm². Le potentiel de ce composant de régénération est environ égal à 360 mV vs Li⁺/Li.

Selon l'invention, on propose une nouvelle méthode d'évaluation de la capacité de l'accumulateur à régénérer.

Comme indiqué plus haut en relation avec les figures 8A et 8B, les inventeurs ont pu constater que du fait que le potentiel du composant de régénération n'est pas forcément stable au cours de la durée de vie de l'accumulateur, et que le potentiel de l'électrode négative est obtenu par une mesure de tension par rapport au potentiel du composant de régénération, il n'est pas toujours possible d'utiliser la valeur absolue du potentiel de l'électrode négative comme valeur seuil.

Aussi, les inventeurs ont pensé à utiliser la dérivée temporelle du potentiel de l'électrode, en tant que seuil relatif. Cette méthode offre également de pouvoir être mise en œuvre sous courant de charge ou de décharge, sans nécessiter de période de relaxation.

La figure 9A illustre sous forme de courbe, la dérivée temporelle du potentiel en cours de charge de l'électrode négative de graphite en début de vie. Comme schématisé, on peut distinguer qu'à l'état de pleine charge, la dérivée temporelle du potentiel a une certaine valeur seuil. Cette valeur seuil, est mesurable en début de vie de l'accumulateur, ou peut être renseignée par le concepteur de l'algorithme du BMS.

Après une phase de vieillissement, induisant une perte de capacité de l'accumulateur d'une valeur de Y%, la dérivée temporelle du potentiel atteint un maximal, comme montré en figure 9B. Sur cette figure 9B, on distingue clairement que la valeur absolue de la dérivée n'a pas atteinte le seuil de pleine charge en raison du manque de lithium échangeable. Il est alors possible d'estimer la capacité perdue, notée Y.

Dès la capacité perdue déterminée, il est possible de démarrer la phase de régénération.

Au lieu d'imposer un courant pour cette phase de régénération, les inventeurs ont pensé à mettre en œuvre une régénération spontanée par activation sous commande de la conduction ionique entre le composant de régénération et l'électrode concernée. Cette méthode permet de s'affranchir de l'utilisation d'un équipement électronique pour la régulation du courant entre le composant de régénération et l'électrode concernée.

Pour ce faire, l'accumulateur est tout d'abord réalisé avec un film de paraffine sous forme solide, en tant qu'élément d'isolation ionique agencé entre le composant de régénération et les électrodes. De préférence, le film de paraffine recouvre totalement la surface du composant de régénération en contact avec l'intérieur de l'accumulateur.

Et, lorsque la quantité d'ions métal évaluée est inférieure ou égale à une valeur seuil, on applique une température élevée typiquement comprise entre 50°C et 65°C au moins localement pour faire fondre le film de paraffine.

La fusion du film de paraffine provoque la conduction ionique et ainsi la désinsertion d'ions métalliques du composant de régénération et leur insertion dans le matériau électrochimique actif de l'électrode négative de l'accumulateur.

On peut bien entendu prévoir que ce soit le BMS qui déclenche l'application de la haute température visant à faire fondre le film de paraffine.

Dans l'exemple de l'accumulateur décrit précédemment, on considère que la capacité perdue est de 5% de la capacité initiale, soit 0,9Ah.

Avant de démarrer la phase de régénération proprement dire, on veille à ce que l'accumulateur ait une capacité chargée supérieure à la capacité qui sera régénérée entre le composant de régénération et l'électrode positive.

Dans l'exemple de l'accumulateur Li-ion considéré, la réinjection des ions échangeables se fait dans l'électrode négative en graphite, dont le potentiel est environ inférieur à 200mV vs Li⁺/Li en fin de charge. Cette valeur est inférieure à celle du composant de régénération dont le matériau est en aluminium lithié, de potentiel environ égale à 360mV vs Li⁺/Li.

Lorsque la phase de régénération est en cours de réalisation ou juste achevée, il est possible d'effectuer le contrôle de la régénération par l'une et/ou l'autre des étapes suivantes:
- imposition d'une charge totale puis d'une décharge afin de comparer la capacité à celle de l'accumulateur en début de vie.
- atteinte du potentiel seuil de pleine charge, comme schématisé en figures 8A, 8B;
- atteinte du seuil de la dérivée temporelle du potentiel à l'état de plein charge, comme schématisé en figures 9A, 9B.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être prévues dans le cadre de l'invention.

Selon une variante avantageuse, on peut dimensionner les connexions permettant la conduction électrique entre le composant de régénération et l'électrode de l'accumulateur à recharger de telle sorte que la résistance électrique équivalente du circuit constitué par ladite électrode et le composant implique une limitation de courant par rapport aux potentiels des électrodes.

On peut ainsi s'affranchir de moyens spécifiques d'imposition de courant, seul le dimensionnement de la résistance linéique des conducteurs étant à considérer. On veille bien entendu que dans ce cas les potentiels soient adaptés afin de pouvoir générer un courant, à savoir que le potentiel du composant de régénération soit supérieur à celui de l'électrode de l'accumulateur.

Par exemple, si la plus grande différence de potentiel entre composant de régénération et électrode est de 1V avec un courant devant être limité à 40mA, alors le système de conduction électrique devra avoir une résistance équivalente de R égal à 1V / 0,040A soit 25 Ohm. Quand la différence de potentielle se réduira, le courant induit se réduira alors également.

Dans le mode de réalisation illustré, on régule la régénération. De manière alternative, on peut juste activer cette régénération pour une valeur fixée au préalable, par exemple correspondant à 2% de la capacité. Ce mode que l'on peut qualifier de « flash » ou « coup de poing » a également pour avantage de ne pas nécessiter de troisième borne.

Bien que décrite en référence à un accumulateur Li-ion, l'invention peut tout aussi bien s'appliquer à tout générateur électrochimique métal-ion fonctionnant sur le principe d'insertion-désinsertion d'ions métallique.

## Revendications

1. Procédé de régénération de la capacité d'un accumulateur électrochimique métal-ion intégrant un composant de régénération comportant au moins une zone de stockage d'ions métalliques,
le procédé comportant les étapes suivantes :
a/ constitution de l'accumulateur avec la mise en œuvre d'un composant de régénération dont le potentiel électrochimique est inférieur à celui de l'anode et/ou de la cathode d'accumulateur, et avec l'agencement d'un élément isolant ionique entre les électrodes et le composant de régénération,
b/ évaluation de la quantité d'ions métalliques échangeables, comportant la détermination de la dérivée temporelle du potentiel d'une des deux électrodes;
c/ lorsque la quantité d'ions métal évaluée est inférieure ou égale à une valeur seuil, application d'un paramètre sur l'élément depuis l'extérieur de l'accumulateur, de sorte à provoquer la conduction ionique et ainsi la désinsertion d'ions métalliques du composant et leur insertion dans le matériau électrochimique actif de l'anode et/ou de la cathode d'accumulateur.

2. Procédé de régénération selon la revendication 1, l'étape c/ étant réalisée par application d'une température globale sur l'accumulateur et/ou locale au moyen d'une résistance chauffante sur l'élément initialement isolant ionique, et/ou par actionnement magnétique et/ou électrique et/ou thermique et/ou par application d'une ou plusieurs ondes lumineuses et/ou d'une ou plusieurs ondes mécaniques.

3. Procédé de régénération selon la revendication 2, l'étape a/ étant réalisée au moyen d'un film de paraffine sous forme solide, en tant qu'élément d'isolation ionique étant agencé entre le composant de régénération et les électrodes, l'étape c/ étant réalisée par application d'une température au-delà de la température de fusion de la paraffine.

4. Procédé de régénération selon l'une des revendications 1 à 3, la détermination selon l'étape b/ étant réalisée sur l'électrode négative (anode) de l'accumulateur.

5. Procédé de contrôle de la régénération d'un accumulateur métal-ion dont la capacité est en cours de régénération ou régénérée selon le procédé d'une des revendications 1 à 4, comportant l'un et/ou l'autre des étapes suivantes :
i/ imposition d'une charge totale puis d'une décharge, afin de comparer la capacité à celle de l'accumulateur en début de vie;
ii/ atteinte du potentiel seuil d'au moins une électrode à l'état de pleine charge;
iii/ atteinte du seuil de la dérivée temporelle du potentiel d'au moins une électrode à l'état de plein charge.

6. Accumulateur (A) électrochimique métal-ion, tel qu'un accumulateur Li-ion, comportant :
- au moins une cellule électrochimique C comportant, une cathode (2), une anode (3) et un séparateur (1), imprégné d'un électrolyte, entre l'anode et la cathode, la cellule étant enroulée sur elle-même,
- un composant de régénération comportant au moins une zone (100) de stockage d'ions métalliques,
- deux collecteurs de courant dont un (50) est relié à l'anode et l'autre (40) à la cathode,
- un boitier (6) agencé pour loger la cellule électrochimique enroulée avec étanchéité tout en étant traversé par une partie des collecteurs de courant formant les bornes de sortie,
- un élément d'isolation ionique entre les électrodes de la cellule électrochimique et le composant de régénération, l'élément étant adapté de sorte que son isolation ionique soit inopérante par application d'un paramètre depuis l'extérieur de l'accumulateur.

7. Accumulateur (A) électrochimique selon la revendication 6, les connexions permettant la conduction électrique entre le composant de régénération et une à recharger parmi les deux électrodes étant dimensionnées de telle sorte que la résistance électrique équivalente du circuit constitué par ladite électrode et le composant implique une limitation de courant par rapport aux potentiels des électrodes.

8. Accumulateur (A) électrochimique selon la revendication 6 ou 7, constituant un accumulateur Lithium-ion, Sodium-ion, Magnésium-ion, ou Aluminium-ion.

9. Accumulateur Li-ion selon la revendication 8, le matériau du composant de régénération étant choisi parmi un métal formant un alliage avec le lithium, de préférence un alliage aluminium-lithium de formule Lix Al avec x compris entre 0 et 1, un alliage silicium-lithium, un alliage bismuth-lithium, un alliage étain-lithium.

## Patentansprüche

1. Verfahren zur Regeneration der Kapazität eines elektrochemischen Metall-Ionen-Akkumulators, welcher einen Regenerationsbestandteil beinhaltet, der mindestens einen Bereich zur Speicherung von Metallionen aufweist,
wobei das Verfahren die folgenden Schritte aufweist:
a/ Zusammenstellen des Akkumulators, wobei ein Regenerationsbestandsteil eingesetzt wird, dessen elektrochemisches Potenzial geringer als dasjenige der Akkumulatoranode und/oder -kathode ist, und wobei ein ionenbezogen isolierendes Element zwischen den Elektroden und dem Regenerierungsbestandteil angeordnet wird,
b/ Bestimmen der Menge an austauschbaren Metallionen, wobei die zeitliche Ableitung des Potenzials einer der beiden Elektroden bestimmt wird;
c/ wenn die bestimmte Menge an Metallionen kleiner oder gleich einem Schwellenwert ist, Einwirkenlassen eines Parameters auf das Element von außerhalb des Akkumulators, derart, dass eine Ionenleitung ausgelöst wird, um auf diese Weise Metallionen aus dem Bestandteil herauszulösen und sie in das elektrochemische Wirkmaterial der Akkumulatoranode und/oder der -kathode einzufügen.

2. Regenerationsverfahren nach Anspruch 1, wobei der Schritt c/ durchgeführt wird, indem eine Temperatur auf den Akkumulator insgesamt und/oder lokal mittels eines Heizwiderstands auf das ursprünglich ionenbezogen isolierende Element einwirken gelassen wird, und/oder indem eine magnetische und/oder elektrische und/oder thermische Betätigung erfolgt und/oder indem eine oder mehrere Lichtwellen und/oder ein oder mehrere mechanische Wellen einwirken gelassen werden.

3. Regenerationsverfahren nach Anspruch 2, wobei der Schritt a/ mittels einer Paraffindünnschicht in feststofflicher Form durchgeführt wird, die als ionenbezogen isolierendes Element zwischen dem Regenerationsbestandteil und den Elektroden angeordnet wird, wobei der Schritt c/ durchgeführt wird, indem eine Temperatur oberhalb der Schmelztemperatur des Paraffins einwirken gelassen wird.

4. Regenerationsverfahren nach einem der Ansprüche 1 bis 3, wobei die Bestimmung gemäß Schritt b/ an der negativen Elektrode (Anode) des Akkumulators durchgeführt wird.

5. Verfahren zur Steuerung der Regeneration eines Metall-Ionen-Akkumulators, dessen Kapazität einen Regenerationsvorgang durchläuft oder gemäß dem Verfahren eines der Ansprüche 1 bis 4 regeneriert wird, wobei es einen oder mehrere der folgenden Schritte umfasst:
i/ zwangsläufiges Durchführen eines vollständigen Lade und anschließend eines Entladevorgangs, um die Kapazität mit derjenigen des Akkumulators bei der Inbetriebnahme zu vergleichen;
ii/ Erreichen des Potentialschwellenwerts mindestens einer Elektrode im vollständig geladenen Zustand;
iii/ Erreichen des Schwellenwerts der zeitlichen Ableitung des Potenzials mindestens einer Elektrode im vollständig geladenen Zustand.

6. Elektrochemischer Metall-Ionen-Akkumulator (A), wie etwa ein Li-Ionen-Akkumulator, der Folgendes aufweist:
- mindestens eine elektrochemische Zelle C, die eine Kathode (2), eine Anode (3) und einen Separator (1) umfasst, welcher mit einem Elektrolyten durchtränkt ist und sich zwischen der Anode und der Kathode befindet, wobei die Zelle um sich selbst aufgerollt ist,
- einen Regenerationsbestandteil, der mindestens einen Bereich (100) zur Speicherung von Metallionen aufweist,
- zwei Stromsammler, wobei einer (50) davon mit der Anode und der andere (40) mit der Kathode verbunden ist,
- ein Gehäuse (6), dass derart angeordnet ist, dass es die aufgerollte elektrochemische Zelle auf abdichtende Weise aufnimmt, wobei sich ein Abschnitt der Stromsammler derart durch dieses erstreckt, dass die ausgangsseitigen Anschlüssen gebildet werden,
- ein ionenbezogenes Isolationselement zwischen den Elektroden der elektrochemischen Zelle und dem Regenerationsbestandteil, wobei das Element derart angepasst ist, dass seine ionenbezogene Isolierung nicht wirksam ist, wenn ein Parameter von außerhalb des Akkumulators zur einwirken gelassen wird.

7. Elektrochemischer Akkumulator (A) nach Anspruch 6, wobei die Verbindungen, welche eine Stromleitung zwischen dem Regenerationsbestandteil und einer zu ladenden der beiden Elektroden ermöglichen, derart ausgelegt sind, dass der elektrische Äquivalent-Widerstand des Stromkreises, welcher aus der Elektrode und dem Bestandteil besteht, mit einer Strombegrenzung unter Bezugnahme auf die Potenziale der Elektroden einhergeht.

8. Elektrochemischer Akkumulator (A) nach Anspruch 6 oder 7, der einen Lithium-Ionen-, Natrium-Ionen-, Magnesium-Ionen- oder Aluminium-Ionen-Akkumulator darstellt.

9. Li-Ionen-Akkumulator nach Anspruch 8, wobei das Material des Regenerationsbestandteils aus einem Metall ausgewählt ist, welches eine Legierung mit Lithium bildet, vorzugsweise einer Aluminium-Lithium-Legierung der Formel Lix Al, wobei x im Bereich von 0 bis 1 liegt, einer Silicium-Lithium-Legierung, einer Bismut-Lithium-Legierung, einer Zinn-Lithium-Legierung.

## Claims

1. Method for regenerating the capacity of a metal-ion electrochemical battery incorporating a regeneration component comprising at least one region for storing metal ions,
the method comprising the following steps:
a/ constituting the battery with the implementation of a regeneration component whose electrochemical potential is lower than that of the anode and/or of the cathode of the battery, and with the arrangement of an ion-insulating element between the electrodes and the regeneration component,
b/ evaluating the quantity of exchangeable metal ions, comprising determining the time derivative of the potential of one of the two electrodes;
c/ when the evaluated quantity of metal ions is smaller than or equal to a threshold value, applying a parameter to the element from outside the battery, so as to bring about ionic conduction and thus the disinsertion of metal ions from the component and insertion thereof into the active electrochemical material of the anode and/or the cathode of the battery.

2. Regenerating method according to Claim 1, step c/ being carried out by applying an overall temperature to the battery and/or a local temperature by means of a heating resistor to the initially ion-insulating element, and/or by means of magnetic and/or electric and/or thermal activation and/or by applying one or more light waves and/or one or more mechanical waves.

3. Regenerating method according to Claim 2, step a/ being carried out by means of a film of paraffin in solid form as the ion-insulating element being arranged between the regeneration component and the electrodes, step c/ being carried out by applying a temperature above the melting point of paraffin.

4. Regenerating method according to one of Claims 1 to 3, the determining operation according to step b/ being carried out on the negative electrode (anode) of the battery.

5. Method for controlling the regeneration of a metal-ion battery whose capacity is being regenerated or is regenerated according to the method of one of Claims 1 to 4, comprising one or more of the following steps:
i/ imposing a total charge and then a discharge, in order to compare the capacity with that of the battery at start of life;
ii/ reaching the threshold potential of at least one electrode in the fully charged state;
iii/ reaching the threshold of the time derivative of the potential of at least one electrode in the fully charged state.

6. Metal-ion electrochemical battery (A), such as a Li-ion battery, comprising:
- at least one electrochemical cell C comprising a cathode (2), an anode (3) and a separator (1), impregnated with an electrolyte, between the anode and the cathode, the cell being wound on itself,
- a regeneration component comprising at least one region (100) for storing metal ions,
- two current collectors, one (50) of which is connected to the anode and the other (40) of which is connected to the cathode,
- a housing (6) designed to house the wound electrochemical cell in a sealtight manner while having a portion of the current collectors, forming the output terminals, pass therethrough,
- an ion-insulating element between the electrodes of the electrochemical cell and the regeneration component, the element being designed so that its ion insulation is deactivated by applying a parameter from outside the battery.

7. Electrochemical battery (A) according to Claim 6, the connections allowing electrical conduction between the regeneration component and one to be recharged from among the two electrodes being dimensioned such that the equivalent electrical resistance of the circuit constituted by said electrode and the component entails a current limitation with respect to the potentials of the electrodes.

8. Electrochemical battery (A) according to Claim 6 or 7, constituting a lithium-ion, sodium-ion, magnesium-ion, or aluminium-ion battery.

9. Li-ion battery according to Claim 8, the material of the regeneration component being chosen from among a metal forming an alloy with lithium, preferably an aluminium-lithium alloy with the formula LiₓAl where x is between 0 and 1, a silicon-lithium alloy, bismuth-lithium alloy, or tin-lithium alloy.
